Europäisches Patentamt

European Patent Office

Office européen des brevets

(19)

(11) Veröffentlichungsnummer: **0 028 201**
**B1**

# (12) EUROPÄISCHE PATENTSCHRIFT

(45) Veröffentlichungstag der Patentschrift:
**13.04.83** ,

(21) Anmeldenummer: **80730066.0**

(22) Anmeldetag: **30.09.80**

(51) Int. Cl.³: **H 02 G 15/072**

(54) Steuerelement für Hochspannungsgeräte und Verfahren zur Herstellung eines Steuerelementes.

(30) Priorität: **30.10.79 DE 2944121**

(43) Veröffentlichungstag der Anmeldung:
**06.05.81 Patentblatt 81/18**

(45) Bekanntmachung des Hinweises auf die Patenterteilung:
**13.04.83 Patentblatt 83/15**

(84) Benannte Vertragsstaaten:
**FR GB IT SE**

(56) Entgegenhaltungen:
**DE-A-1 490 115**
**DE-A-1 540 468**
**DE-A-2 606 238**

(73) Patentinhaber: **SIEMENS AKTIENGESELLSCHAFT,**
**Berlin und München Wittelsbacherplatz 2,**
**D-8000 München 2 (DE)**

(72) Erfinder: **Lehrl, Hans, Klaushager Weg 53,**
**D-1000 Berlin 28 (DE)**
Erfinder: **Schroth, Reinhard, Cimbernstrasse 6,**
**D-1000 Berlin 38 (DE)**

Steuerelement für Hochspannungsgeräte und Verfahren zur Herstellung eines Steuerelementes

Die Erfindung liegt auf dem Gebiet der Garnituren für Hochspannungszwecke und ist bei der konstruktiven Ausgestaltung und bei der Herstellung von vorgefertigten, aufschiebbaren Steuerelementen anzuwenden. Spezielles Anwendungsgebiet sind Garnituren für Hochspannungskabel.

In Geräten der Hochspannungstechnik besteht häufig die Notwendigkeit, das elektrische Feld zwischen Hochspannung und Erde zu steuern, um sprunghafte Übergänge und damit verbundene Feldstärkespitzen auszugleichen. Hierbei bedient man sich häufig der sogenannten kapazitiven Feldsteuerung, bei der mehrere Elektroden gestaffelt zueinander angeordnet sind, wobei die erste Elektrode auf Erdpotential und die letzte Elektrode annähernd auf Hochspannungspotential liegt. Derartige kapazitive Feldsteuerungen sind beispielsweise bei Hochspannungsdurchführungen und in Garnituren von Hochspannungskabeln üblich.

Bei der konstruktiven Ausgestaltung von Garnituren für Hochspannungskabel ist man zur Vereinfachung der Montagearbeiten dazu übergegangen, vorgefertigte Teile zu verwenden, die unter elastischer Aufweitung lediglich auf das entsprechend zubereitete Kabelende aufzuschieben sind. So ist beispielsweise für Hochspannungskabel ein vorgefertigter Aufsteckendenabschluß bekannt, der aus mehreren aufeinandergeschichteten Isolierkörpern mit in die Isolierkörper eingebetteten Deflektoren aus leitfähigem Material besteht. Die einzelnen Teile des Endenabschlusses können dabei aus Silikonkautschuk gefertigt sein (DE-A-2 606 238).

Zur Steuerung des elektrischen Feldes in Endenabschlüssen von Mittelspannungskabeln werden elastische Isolierkörper verwendet, die nur einen einzigen Deflektor enthalten. Dieser Deflektor kann ein vorgefertigtes Bauteil sein, das zur Herstellung des kompletten Steuerelementes bzw. des aufschiebbaren Garniturenkörpers mit einer vernetzbaren Silikonkautschukmasse umgossen wird (DE-B1-2 643 197). Der Deflektor (Konus) kann aber auch aus einer homogenen Schicht eines dehnbaren elektrischen leitenden Werkstoffes bestehen, die auf einen elastischen Konusträger aufgebracht und mit einem elastischen Abschlußteil verklebt ist (DE-A-1 490 115).

Ausgehend von einem radial elastisch aufweitbaren, vorgefertigten Steuerelement zur Steuerung des elektrischen Feldes in Geräten der Hochspannungstechnik, insbesondere in Garnituren von Hochspannungskabeln, das auf einen blanken oder isolierten Leiter aufschiebbar ist und aus mehreren elastischen Isolierkörpern besteht, die in Achsrichtung des Leiters aufeinanderfolgend und ineinandergreifend angeordnet und mit trichterförmig verlaufenden Stirnflächen versehen sind und denen elektrisch leitende Teile aus ebenfalls elastischem Material zugeordnet sind, die gemeinsam eine kapazitive Steuerung bilden, liegt der Erfindung die Aufgabe zugrunde, durch einstückige Ausgestaltung des gesamten Steuerelementes dessen elektrische Festigkeit zu verbessern.

Zur Lösung dieser Aufgabe ist gemäß der Erfindung vorgesehen, daß jedes elektrisch leitende Teil eine 0,005 bis 0,5 mm dicke Schicht bildet, die zwischen den trichterförmigen Stirnflächen zweier stoffschlüssig miteinander verbundener Isolierkörper angeordnet und mit diesen verklebt oder vernetzt oder vulkanisiert ist.

Bei einem derart ausgebildeten Steuerelement bilden die elektrisch leitenden Teile und das sie umgebende Isoliermaterial ein einziges Bauteil, dessen Elemente hohlraumfrei ineinander übergehen. Das Steuerelement kann daher bei der Montage als Ganzes gehandhabt werden und weist keinerlei Trennfugen auf, die zu elektrischen Störungen führen können. Bei zylindrischer oder annähernd zylindrischer Außenkontur des Steuerelementes stellt sich im übrigen auf der ganzen Länge der gleiche Anpreßdruck zum blanken oder isolierten Leiter ein, wodurch Spaltbildungen im Grenzbereich Leiter bzw. isolierter Leiter/Steuerelement unterbunden sind.

Bei der Herstellung des Steuerelementes wird erfindungsgemäß derart vorgegangen, daß zunächst ein Isolierkörper aus vernetzbarem oder vulkanisierbarem Material hergestellt und zumindest anvernetzt oder anvulkanisiert wird, daß der Isolierkörper danach ganz oder teilweise mit einer elektrisch leitenden Dispersion aus einem mit Ruß angereicherten, vernetzbaren oder vulkanisierbaren polymeren Kunststoff durch einmaliges oder mehrfaches Tauchen oder Besprühen beschichtet wird und daß anschließend an die die elektrisch leitende Schicht aufweisende Oberfläche des Isolierkörpers ein weiterer Isolierkörper angeformt wird, der dann gemeinsam mit dem erstgenannten Isolierkörper und der elektrisch leitenden Schicht ausvulkanisiert oder fertig vernetzt wird.

Bei diesem Verfahren erfolgt die Herstellung des Steuerelementes also stufenweise, d. h., Isolierkörper und leitende Schichten werden abwechselnd aufeinanderfolgend hergestellt und abschließend der auf diese Weise gebildete einheitliche Körper ausvulkanisiert bzw. fertig vernetzt. Damit ist eine hohlraumfreie, durch chemische und/oder physikalische Wirkungen bedingte Verbindung der einzelnen aufeinanderfolgend hergestellten Elemente des Steuerelementes gewährleistet.

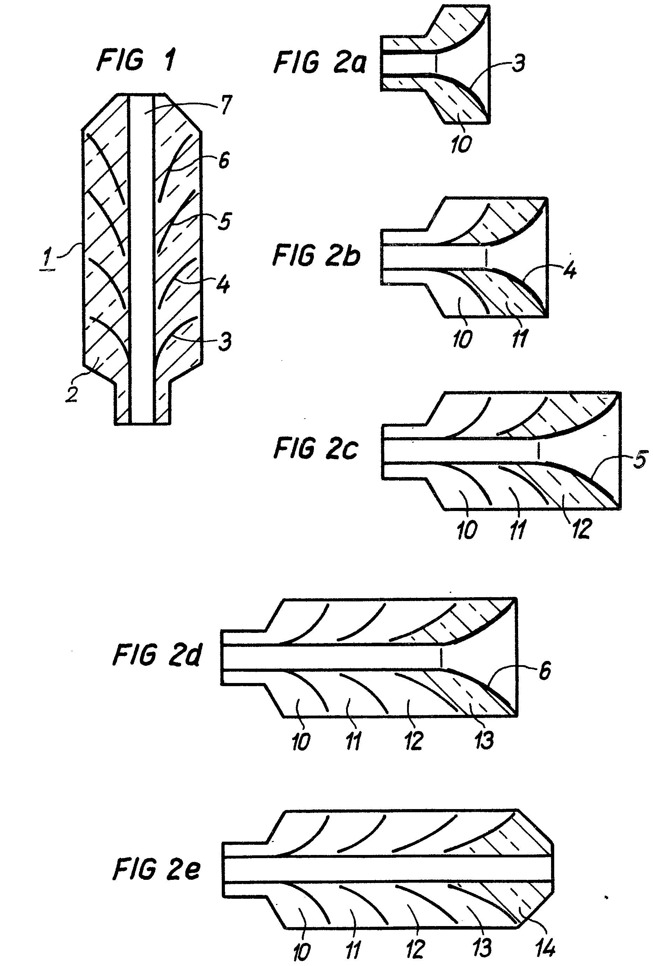

Ein Ausführungsbeispiel des neuen Steuerelementes ist in Fig. 1 dargestellt. Anhand der Darstellung in Fig. 2 soll das neue Herstellungsverfahren beschrieben werden.

Fig. 1 zeigt ein vorgefertigtes, auf einen isolierten Leiter aufschiebbares und dabei elastisch aufweitbares Steuerelement 1, das aus einem Isolierkörper 2 aus elastischem Isoliermaterial mit darin eingebetteten Steuerelektroden (Schichten 3, 4, 5 und 6) aus elektrisch leitendem Material besteht. Diese Steuerelektroden bilden eine kapazitive Spannungssteuerung. Das Steuerelement ist mit einer Längsbohrung 7 versehen, die zur Aufnahme eines Kabelendes vorgesehen ist.

Als Material für den Isolierkörper 2 kommen elastische Isolierstoffe in Betracht, wie sie heute für Garnituren von Starkstromkabeln üblicherweise Verwendung finden. Hierzu gehören beispielsweise Kautschuke auf der Basis von Mischpolymerisaten des Äthylens und insbesondere auch Silikonkautschuke. Besonders geeignet sind additionsvernetzbare Silikonkautschuke auf der Basis eines platinkatalysierten, vinylgruppenhaltigen Polysiloxans, dessen Viskosität im unvernetzten Zustand bei Raumtemperatur 5 bis 90 Ns/m², vorzugsweise 20 bis 50 Ns/m², beträgt und die nach dem Aushärten eine Shore-A-Härte von höchstens 35 aufweisen.

Die elektrisch leitenden Schichten 3 bis 6, die vorzugsweise entlang der gewünschten Äquipotentiallinien des Hochspannungsfeldes verlaufen, haben eine Dicke von etwa 0,2 mm und bestehen vorzugsweise aus dem gleichen Grundmaterial wie der Isolierkörper 2. Das Grundmaterial ist durch Zusatz von Ruß elektrisch leitend gemacht.

Bei der Herstellung des Steuerelementes wird gemäß Fig. 2a bis 2e zunächst ein Isolierkörper 10 hergestellt, der anschließend unter Verwendung einer Maske mit der elektrisch leitfähigen Schicht 3 beschichtet wird. An den Isolierkörper 10 wird anschließend gemäß Fig. 2b der Isolierkörper 11 angeformt und danach ebenfalls unter Verwendung einer Maske beispielsweise durch Besprühen mit der elektrisch leitenden Schicht 4 beschichtet. Auf die gleiche Art und Weise werden gemäß Fig. 2c bis 2e weitere Isolierkörper 12, 13 und 14 sowie elektrisch leitende Schichten 5 und 6 aufgebracht bzw. angeformt. Nach Herstellung des gesamten Körpers wird dieser unter Wärmeeinwirkung vollständig vernetzt oder vulkanisiert, wodurch die endgültige, hohlraumfreie Verbindung der einzelnen Elemente miteinander und untereinander erfolgt.

Die Herstellung der Steuerelemente kann auch ausgehend von dem Isolierkörper 14 erfolgen. Man kann aber auch sowohl vom Isolierkörper 10 als auch vom Isolierkörper 14 ausgehen und das gesamte Steuerelement durch Anformen eines Zwischenstückes (z. B. Isolierkörper 12) an ein Oberteil und ein Unterteil fertigstellen. In jedem Fall hat das stufenweise Vorgehen den Vorteil, daß den Leiterschichten unterschiedliche Krümmungen gegeben werden können, wodurch eine optimale Ausgestaltung der kapazitiven Steuerung möglich ist.

**Patentansprüche**

1. Auf einen blanken oder isolierten Leiter aufschiebbares, elastisch aufweitbares, vorgefertigtes Steuerelement (1) zur Steuerung des elektrischen Feldes in Geräten der Hochspannungstechnik, insbesondere in Garnituren von Hochspannungskabeln, bestehend aus mehreren elastischen Isolierkörpern (2; 10, 11, 12, 13, 14), die in Achsrichtung des Leiters aufeinanderfolgend und ineinandergreifend angeordnet und mit trichterförmig verlaufenden Stirnflächen versehen sind und denen elektrisch leitende Teile aus ebenfalls elastischem Material zugeordnet sind, die gemeinsam eine kapazitive Steuerung bilden, dadurch gekennzeichnet, daß jedes elektrisch leitende Teil eine 0,005 bis 0,5 mm dicke Schicht (3, 4, 5, 6) bildet, die zwischen den trichterförmigen Stirnflächen zweier stoffschlüssig miteinander verbundenen Isolierkörper (2; 10, 11, 12, 13, 14) angeordnet und mit diesen verklebt oder vernetzt oder vulkanisiert ist.

2. Verfahren zur Herstellung eines Steuerelementes (1) nach Anspruch 1, dadurch gekennzeichnet, daß zunächst ein Isolierkörper (10) aus vernetzbarem oder vulkanisierbarem Material hergestellt und zumindest anvernetzt oder anvulkanisiert wird, daß der Isolierkörper (10) danach ganz oder teilweise mit einer elektrisch leitenden Dispersion aus einem mit Ruß angereicherten, vernetzbaren oder vulkanisierbaren polymeren Kunststoff durch einmaliges oder mehrfaches Tauchen oder Besprühen beschichtet wird und daß anschließend an die die elektrisch leitende Schicht (3) aufweisende Oberfläche des Isolierkörpers (10) ein weiterer Isolierkörper (11) angeformt wird, der dann gemeinsam mit dem erstgenannten Isolierkörper (10) und der elektrisch leitenden Schicht (3) ausvulkanisiert oder fertig vernetzt wird.

**Claims**

1. An elastically expansible, premanufactured control element (1) which may be applied to a naked or insulated conductor and which serves to control the electric field in high voltage equipment, in particular in the fittings of high voltage cables; consisting of a plurality of elastic insulating bodies (2; 10, 11, 12, 13, 14) arranged successively in the axial direction of the conductor so as to engage into one another and provided with funnel shaped end surfaces, and which are assigned electrically conductive components which likewise consist of elastic material, which together form a capacitive control unit; characterised in that each electrically conducitve component forms a layer (3, 4, 5, 6) which has a thickness of 0.005 to 0.5 mm and which is arranged between the funnel shaped end surfaces of two materially bonded insulating bodies (2; 10, 11, 12, 13, 14) and is glued, cross-linked or vulcanised thereto.

2. A process for the production of a control element (1) as claimed in Claim 1, characterised in that firstly an insulating body (10) is produced from cross-linkable or vulcanisable material and is at least fixed by cross-linking or vulcanisation, that thereafter the insulating body (10) is coated in whole or in part with an electrically conductive dispersion composed of a synthetic polymer enriched with soot and which can be cross-linked or vulcanised by dipping or spraying once or several times, and that subsequently a further insulating body (11) is attached to the surface of the insulating body (10) provided with the electrically conductive coating (3) and is then, together with the first mentioned insulating body (10) and the electrically conductive coating (3), subjected to a final vulcanisation or cross-linking process.

**Revendications**

1. Elément de contrôle (1) préfabriqué qui peut s'élargir élastiquement et être enfilé sur un conducteur nu ou isolé, pour le contrôle du champ électrique dans des dispositifs de la technique à haute tension, notamment dans des garnitures de câbles à haute tension, constitué par plusieurs corps élastiques isolants (2; 10, 11, 13, 14) qui sont disposés les uns à la suite des autres et s'engagent les uns dans les autres suivant la direction axiale du conducteur, qui sont munis de surfaces frontales en forme d'entonnoir et auxquels sont associées des parties conductrices du point de vue électrique, également en matériau élastique, qui forment en commun un contrôle capacitif, caractérisé par le fait que chaque partie conductrice du point de vue électrique forme une couche épaisse (3, 4, 5, 6) de 0,005 à 0,5 mm qui est disposée entre les surfaces frontales en forme d'entonnoir de deux corps isolants (2; 10, 11, 12, 13, 14) réunis d'une manière compatible du point de vue du matériau, et est collée ou réticulée ou vulcanisée avec ceux-ci.

2. Procédé pour la fabrication d'un élément de contrôle (1) suivant la revendication 1, caractérisé par le fait qu'on fabrique tout d'abord un corps isolant (10) en matériau réticulable ou vulcanisable et on commence au moins à le réticuler ou à le vulcaniser, que le corps isolant (10) est ensuite recouvert, entièrement ou partiellement, par immersion ou aspersion, en une ou plusieurs fois, d'une dispersion conductrice du point de vue électrique qui est constituée par une matière synthétique polymère, réticulable ou vulcanisable, enrichie de noir de fumée, et qu'ensuite est formé, sur la surface du corps isolant (10) qui comporte la couche (3) conductrice du point de vue électrique, un autre corps isolant (11) qui est alors complètement vulcanisé ou réticulé en même temps que ledit premier corps isolant (10) et la couche (3) conductrice du point de vue électrique.

FIG 1

FIG 2a

FIG 2b

FIG 2c

FIG 2d

FIG 2e